# EUROPEAN PATENT SPECIFICATION

(11) **EP 3 118 080 B1**
(45) Date of publication and mention of the grant of the patent: **09.09.2020**
(21) Application number: 14885656.0
(22) Date of filing: 05.11.2014
(51) Int. Cl.: B61C 3/00, B61C 7/04

(54) **TRAMCAR MOTIVE POWER SYSTEM**
STRASSENBAHNWAGENANTRIEBSSYSTEM
SYSTÈME DE PUISSANCE MOTRICE DE VOITURE DE TRAMWAY

(30) Priority: 14.03.2014 CN 201410097444
(43) Date of publication of application: 18.01.2017
(73) Proprietor: CRRC Tangshan Co., Ltd., Fengrun District Tangshan Hebei 063035 (CN)
(72) Inventor: SUN, Bangcheng, Tangshan Hebei 063035 (CN); CHEN, Weirong, Tangshan Hebei 063035 (CN); HUANG, Liewei, Tangshan Hebei 063035 (CN); LI, Minggao, Tangshan Hebei 063035 (CN); LI, Ming, Tangshan Hebei 063035 (CN); LIU, Zhixiang, Tangshan Hebei 063035 (CN); SHI, Junjie, Tangshan Hebei 063035 (CN); ZANG, Xiaoyan, Tangshan Hebei 063035 (CN)
(74) Representative: Dr. Gassner & Partner mbB
(86) International application number: PCT/CN2014/090380
(87) International publication number: WO 2015/135330

(56) References cited:
- CN-A- 1 475 378
- CN-A- 1 785 707
- CN-A- 1 885 676
- CN-A- 102 700 427
- CN-A- 103 879 412
- DE-A1-102011 083 216
- FR-A1- 2 970 455
- FR-B1- 2 963 996
- KR-A- 20090 062 332
- US-A1- 2014 070 736

## Description

### TECHNICAL FIELD

The present disclosure relates to the field of hybrid power systems, and particularly, to a tramcar power system.

### BACKGROUND

In recent years, since serious environment pollutions, oil resource depleting and global warming, many cities in our country have begun to plan and construct tramcar, and set up non power grid areas in important regions in order to protect urban landscape. Energy-saving, environment-friendliness, safety and reliability will be become a symbol of new century rail transit technology modernization, these goals of the rail transit can be achieved by studying energy storage technologies and intelligent control strategies, on the basis of achieving high speed rail transit and popularizing the urban rail transit.

At present, the CRRC Tangshan Co. has developed a hybrid power 100%-low-floor tramcar that is jointly powered by a contact line and an onboard super capacitor and onboard power battery. The power supply principle is as follows: a hybrid power system where a contact line and onboard batteries (comprising the super capacitor and the power battery) jointly supply the power has the following power supply strategy: when the contact line has electricity, the contact line supplies electricity to the traction converter (DC/AC converter); when the contact line is disengaged or has no electricity, the super capacitor and power battery supply electricity to the traction converter via corresponding converters (DC/DC converters) respectively, so that the tramcar is driven.

However, since the power battery has a relatively shorter service life due to a lot of heat generated during the battery's discharge-charge process, the operation performance of the above described hybrid power 100%-low-floor tramcar jointly powered by a contact line and an onboard super capacitor and an onboard power battery is limited by the power battery's charge-discharge technology level.

Document D1 (FR2970455 A1) provides that a vehicle comprising an electric machine (3) supplied by a main power source and second power sources (8) comprising a super capacitor module (11) and a battery module (12) for storing electric energy. The second power sources are provided with a kinetic energy storage module, and a connector is connected to an external power supply and it has a socket electrically connected to the second power sources. See Abstract.

Document D2 (CN 1785707 A) provides a fuel cell vehicle mixed power system using a super capacitor as an auxiliary power device. The galvanic pile of the fuel cell system is connected with a motor controller by means of forward direction of the power diode; the super capacitor is connected with the cathode of the power diode by the bidirectional main DC/DC converter; the motor controller, the bidirectional main DC/DC converter, the super capacitor management system, the bidirectional 24V DC/DC converter, the fuel cell controller and the whole vehicle controller are electrically connected; and the fuel cell controller, the bidirectional main DC/DC converter, the bidirectional 24V DC/DC converter, the motor controller and the super capacitor management system are connected with whole vehicle controller by means of the CAN network. See Abstract.

### SUMMARY

Accordingly, the present disclosure provides a tramcar power in order to solve the technical problem that the operation performance of the hybrid power 100%-low-floor tramcar jointly powered by a contact line and an onboard super capacitor and an onboard power battery is limited by the power battery's charge-discharge technology level.

The present disclosure provides a tramcar power system according to the features set forth in claim 1.

The present disclosure utilizes high power density property of a super capacitor to provide a high starting acceleration and climbing ability, and high energy density property of a fuel cell and a power battery to provide a long mileage. In the present disclosure, by controlling the super capacitor to preferentially provide electrical energy required for accelerating the tramcar, and controlling the fuel cell and the power battery to provide electrical energy required for traveling uniformly, the disadvantages of insufficient energy of the super capacitor and insufficient power of the power battery are solved. Alternatively, by controlling the fuel cell and/or the power battery to preferentially provide electrical energy required for accelerating the tramcar, and when the power that the tramcar requires is higher than the power that the fuel cell and/or the power battery can provide, controlling the super capacitor to provide electrical energy required for making up the balance power, complementary between these energy storage components can realized, and high power density of the super capacitor can be effectively utilized to prolong power supply time of the super capacitor, so that optimum acceleration performance of the tramcar is realized, and meanwhile, the fuel cell and the power battery are mutually redundant so as to realize emergency rescue when one of them is under fault condition, etc.

### BRIEF DESCRIPTION OF DRAWINGS

FIG 1 is a schematic diagram of an exemplary tramcar power system provided in the present disclosure; and
FIG 2 is a flow chart of an exemplary method for controlling the tramcar power system provided in the present disclosure.

### DESCRIPTION OF EMBODIMENTS

In order to make objects, technical solutions and advantages of embodiments of the present disclosure clearer, the technical solutions in the embodiments of the present disclosure will be described hereunder clearly and completely with reference to accompanying drawings. Obviously, the described embodiments are only a part of embodiments of the present disclosure, rather than all of them. Any other embodiments obtained by persons skilled in the art based on the embodiments of the present disclosure herein without making any creative effort shall fall into the protection scope of the present disclosure.

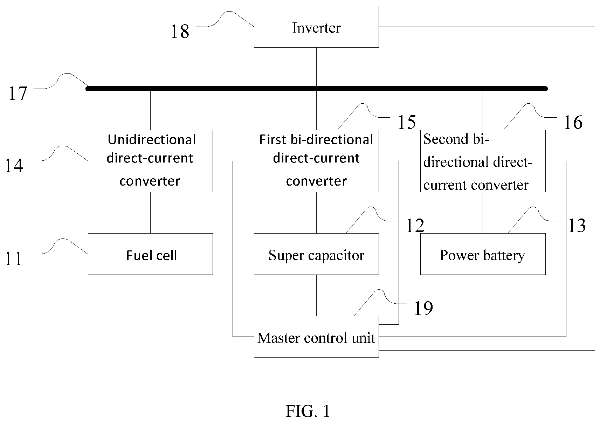

As shown in FIG. 1, a schematic diagram of an exemplary tramcar power system provided in the present disclosure specifically includes: a fuel cell 11, a super capacitor 12, a power battery 13, an unidirectional direct-current converter 14, a first bi-directional direct-current converter 15, a second bi-directional direct-current converter 16, a direct-current bus 17, an inverter 18, and a master control unit 19, wherein the fuel cell 11 is coupled to the unidirectional direct-current converter 14; the super capacitor 12 is coupled to the first bi-directional direct-current converter 15; the power battery 13 is coupled to the second bi-directional direct-current converter 16; the unidirectional direct-current converter 14, the first bi-directional direct-current converter 15 and the second bi-directional direct-current converter 16 are coupled to the inverter 18 via the direct-current bus 17; the inverter 18 is coupled to a motor of the tramcar; the fuel cell 11, the super capacitor 12, the power battery 13, the first bi-directional direct-current converter 15, the second bi-directional direct-current converter 16 and the inverter 18 are coupled to the master control unit 19; and the master control unit 19 is coupled to a tramcar controlling device of the tramcar.

It should be noted that, all the couplings between the fuel cell 11 and the unidirectional direct-current converter 14, between the super capacitor 12 and the first bi-directional direct-current converter 15, between the power battery 13 and the second bi-directional direct-current converter 16, between the unidirectional direct-current converter 14, the first bi-directional direct-current converter 15, the second bi-directional direct-current converter 16 and the direct-current bus 17, between the direct-current bus 17 and the inverter 18, and between the inverter 18 and the motor of the tramcar may be made through a power line. The couplings between the fuel cell 11, the super capacitor 12, the power battery 13, the first bi-directional direct-current converter 15, the second bi-directional direct-current converter 16, the inverter 18 and the master control unit 19 may be made through an electric wire. The couplings between the master control unit 19 and the tramcar controlling device of the tramcar may be made through a CAN network bus or a MVB network bus.

Optionally, the system may further include an auxiliary system, which is coupled to the fuel cell 11 and/or the power battery 13 so as to provide lighting for the tramcar and/or control temperature inside the tramcar.

Optionally, the tramcar power system may be disposed on top of the tramcar without occupying any space inside or beneath the tramcar. This may increase passenger carrying capacity, realize 100% low-floor, enhancing the convenience of passenger boarding and alighting and enhancing viewing effect when the tramcar travels in a city.

Optionally, when the tramcar is provided with a pantograph, the super capacitor 12 may be coupled to the pantograph, so that the super capacitor 12 may be recharged by the pantograph at charging stations set up at tram stations where the tramcar enters. when a tramcar is not provided with a pantograph, the super capacitor 12 may be recharged by the fuel cell 11 when the tramcar stops at tram stations, and then the energy of the super capacitor 12 may be used to start and accelerate the tramcar.

The tramcar power system described in the present embodiment uses a hybrid power supply mode based on the fuel cell, the super capacitor and the power battery, and uses different power supply mode according to different running phases of the tramcar, thereby achieving acceleration, uniform running, deceleration and braking energy recovery. Moreover, the tramcar power system employs the fuel cell, which is the greenest clean energy source at present, as a power source, which can achieve optimum effects of energy saving and emission reduction. The tramcar that has multiple power supply modes based on the fuel cell, the super capacitor and the power battery may travel in places where a traction power supply system and a contact line system are difficult to be constructed, such as suburbs and tunnels. Such a tramcar can operate without wire mesh in urban areas, thereby saving tramcar line construction costs and preserving urban landscape.

The tramcar power system described in the present embodiment may utilize high power density property of the super capacitor to provide high start acceleration and climbing ability, and utilize high power density property of the fuel cell and the power battery to achieve long mileage. In this embodiment, by controlling the super capacitor to preferentially provide electrical energy for acceleration of the tramcar, and controlling the fuel cell and the power battery to provide electrical energy for uniform running of the tramcar, disadvantages of insufficient energy of the super capacitor and insufficient power of the power battery are solved; alternatively, by controlling the fuel cells and/or the power battery to preferentially provide electrical energy required for accelerating the tramcar, and when the power that the tramcar requires is higher than the power that the fuel cell and/or the power battery can provide, controlling the super capacitor to provide electrical energy required for making up the balance power, complementary between these energy storage components can realized and high power density of the super capacitor can be effectively utilized to prolong the power supply time of the super capacitor, so that optimum acceleration performance of the tramcar is realized, and meanwhile, here the fuel cell and the power battery are mutually redundant so as to realize emergency rescue when one of them is under fault condition, etc.

On the basis of the tramcar power system described in the above Embodiment 1, the present disclosure provides a method for controlling the system.

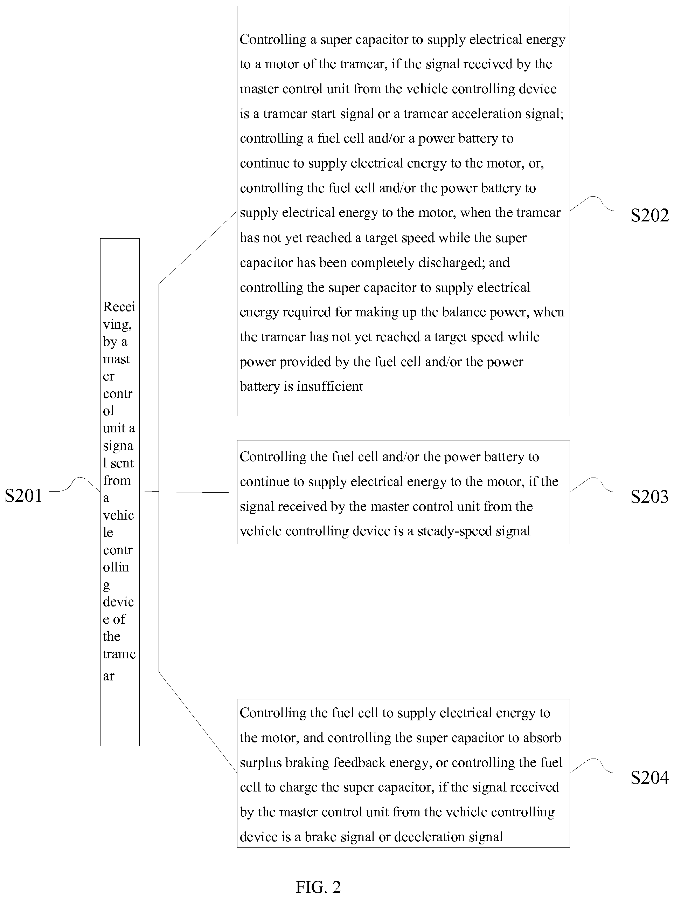

As shown in FIG 2, a flow chart of an exemplary method for controlling the tramcar power system provided in the present disclosure specifically includes the following steps:
S201: receiving, by a master control unit a signal sent from a vehicle controlling device of the tramcar.

Specifically, the master control unit is coupled to the vehicle controlling device via a network bus such as a CAN bus, MVB bus or the like, so as to receive signals sent from the vehicle controlling device.

S202: controlling a super capacitor to supply electrical energy to a motor of the tramcar, if the signal received by the master control unit from the vehicle controlling device is a tramcar start signal or a tramcar acceleration signal; controlling a fuel cell and/or a power battery to continue to supply electrical energy to the motor, or, controlling the fuel cell and/or the power battery to supply electrical energy to the motor, when the tramcar has not yet reached a target speed while the super capacitor has been completely discharged; and controlling the super capacitor to supply electrical energy required for making up the balance power, when the tramcar has not yet reached a target speed while power provided by the fuel cell and/or the power battery is insufficient.

Specifically, if the signal received by the master control unit from the vehicle controlling device is a tramcar start signal or a tramcar acceleration signal, the master control unit will control the super capacitor to discharge electrical energy, the electrical energy is transferred to and converted by a first bi-directional direct-current converter, then transferred to and converted by an inverter, and then transferred to the motor of the tramcar to provide electrical energy for the motor and thereby provide acceleration required by the tramcar. In this way, in starting acceleration phase or ramp accelerating phase, the tramcar may utilize high power density property of the super capacitor to achieve high start acceleration and climbing ability. Furthermore, in the starting acceleration phase, the tramcar may take advantage of various hybrid power supply modes, e.g. fuel cell + super capacitor, super capacitor + power battery, fuel cell + super capacitor + power battery or the like, to increase acceleration power and thereby enhance balance speed of the tramcar. Alternatively, the fuel cell and/or the power battery may be controlled to supply electrical energy to the motor of the tramcar, and when the tramcar has not yet reached a target speed and power provided by the fuel cell and/or the power battery is insufficient, the super capacitor may be controlled to provide electrical energy required for making up the balance power. This enables energy storage components to complement each other, and can effectively take advantage of high power density of the super capacitor to prolong power supply time of the super capacitor, so that optimum acceleration performance of the tramcar is realized.

S203: controlling the fuel cell and/or the power battery to continue to supply electrical energy to the motor, if the signal received by the master control unit from the vehicle controlling device is a steady-speed signal.

Specifically, if the signal received by the master control unit from the vehicle controlling device is a steady-speed signal, the master control unit will control the fuel cell to output electrical energy, the electrical energy is transferred to and converted by an unidirectional direct-current converter, then transferred to and converted by the inverter, and then transferred to the motor of the tramcar; and/or, the master control unit will control the power battery to output electrical energy, the electrical energy is transferred to and converted by a second bi-directional direct-current converter, then transferred to and converted by an inverter, and then transferred to the motor of the tramcar, thereby supplying electrical energy to the motor so that the tramcar may run at steady speed. When the tramcar is running continuously at a steady speed along a flat and straight line or a gentle slope, the fuel cell and the power battery with high energy density are used to achieve long travel range. If the tramcar is running along a relatively flat and straight line, a switching type power supply strategy may be used, that is, the tramcar may use the super capacitor to supply electricity, then switch to the fuel cell and the power battery to supply electricity. In this way, operation cycle cost and maintenance cost of the power system, etc. may be reduced by optimizing the preference order of charging and discharging the fuel cell, the super capacitor and the power battery.

S204: controlling the fuel cell to supply electrical energy to the motor, and controlling the super capacitor to absorb surplus braking feedback energy, or controlling the fuel cell to charge the super capacitor, if the signal received by the master control unit from the vehicle controlling device is a brake signal or deceleration signal.

Specifically, if the signal received by the master control unit from the vehicle controlling device is a brake signal or deceleration signal, the super capacitor is preferably utilized to absorb, at a large current, braking energy (usually, absorbing 50% - 70% of the rated capacity). If the braking energy is relatively high, the power battery may be used to absorb the braking energy at a small current, or a braking resistor may be used to consume the peak power. If the signal received by the master control unit from the vehicle controlling device is a deceleration signal and energy of the super capacitor is at a very low level (e.g. less than 30%), surplus electrical energy of the fuel cell may be utilized to charge the super capacitor, so as to supplement electrical energy of the super capacitor and meanwhile ensure that the fuel cell is in a state of stable output and thereby extends its service life.

In addition, the master control unit controls the fuel cell and/or the power battery to supply electrical energy to an auxiliary system.

The method for controlling the tramcar power system described utilizes high power density property of the super capacitor to provide a high starting acceleration and climbing ability, and high energy density property of the fuel cell and the power battery to provide a long mileage. In this embodiment, by controlling the super capacitor to preferentially provide electrical energy required for accelerating the tramcar, and controlling the fuel cell and the power battery to provide electrical energy required for traveling uniformly, the disadvantages of insufficient energy of the super capacitor and insufficient power of the power battery are solved. Alternatively, by controlling the fuel cell and/or the power battery to preferentially provide electrical energy required for accelerating the tramcar, and when the power that the tramcar requires is higher than the power that the fuel cell and/or the power battery can provide, controlling the super capacitor to provide electrical energy required for making up the balance power, complementary between these energy storage components can realized, and higher power density of the super capacitor can be effectively utilized to prolong the power supply time of the super capacitor, so that optimum acceleration performance of the tramcar is realized, and meanwhile, the fuel cell and the power battery are mutually redundant so as to realize emergency rescue when one of them is under fault condition, etc.

It should be noted that, the foregoing embodiments of the method are set forth as a combination of a series of actions for the purpose of making the description more concise, but persons having ordinary skill in the art should appreciate that the present disclosure is not limited by the particular order of the actions described herein, and some of the steps may be carried out in alternative orders or simultaneously in accordance with the present disclosure. Moreover, persons having ordinary skill in the art should appreciate that the embodiments described herein are preferred embodiments, and the involved actions and modules therein are not necessary for the present disclosure.

Persons having ordinary skill in the art may understand that, all or a part of steps of the foregoing embodiments of the method may be implemented by a program instruction related hardware. The program may be stored in a computer readable storage medium. When the program runs, the steps of the foregoing embodiments of the method are executed. The foregoing storage medium includes various mediums capable of storing program codes, such as a ROM, a RAM, a magnetic disk, or an optical disc.

Finally, it should be noted that the foregoing embodiment is merely intended to explain, rather than limit, the technical solutions of the present disclosure. Although the present disclosure is explained in detail with reference to the foregoing embodiment, persons having ordinary skill in the art should understand that it is possible to make modifications to the technical solutions described in the foregoing embodiment, as long as they fall within the scope defined by the appended claims.

## Claims

1. A tramcar power system, comprising: a fuel cell (11), a super capacitor (12), a power battery (13), an unidirectional direct-current converter (14), a first bi-directional direct-current converter (15), a second bi-directional direct-current converter (16), a direct-current bus (17), an inverter (18), and a master control unit (19),
wherein the fuel cell (11) is coupled to the unidirectional direct-current converter (14), the super capacitor (12) is coupled to the first bi-directional direct-current converter(15), and the power battery (13) is coupled to the second bi-directional direct-current converter (16);
the unidirectional direct-current converter (14), the first bi-directional direct-current converter (15) and the second bi-directional direct-current converter (16) are coupled to the inverter (18) via the direct-current bus (17);
the inverter (18) is coupled to a motor of a tramcar;
the fuel cell (11), the super capacitor (12), the power battery (13), the first bi-directional direct-current converter (15), the second bi-directional direct-current converter (16) and the inverter (18) are coupled to the master control unit (19);
the master control unit (19) is coupled to a tramcar controlling device of the tramcar;
wherein the master control unit (19) is configured to receive a signal sent from a vehicle controlling device of the tramcar;
the master control unit (19) is configured to control the super capacitor (12) to supply electrical energy to the motor of the tramcar, if the signal received by the master control unit (19) from the vehicle controlling device is a tramcar start signal or a tramcar acceleration signal; the master control unit (19) is configured to control the fuel cell (11) and/or the power battery (13) to continue to supply electrical energy to the motor, or, control the fuel cell (11) and/or the power battery (13) to supply electrical energy to the motor, when the tramcar has not yet reached a target speed while the super capacitor (12) has been completely discharged; and the master control unit (19) is configured to control the super capacitor (12) to supply electrical energy required for making up the balance power, when the tramcar has not yet
reached a target speed while power provided by the fuel cell (11) and/or the power battery (13) is insufficient;
the master control unit (19) is configured to control the fuel cell (11) and/or the power battery (13) to continue to supply electrical energy to the motor, if the signal received by the master control unit (19) from the vehicle controlling device is a steady-speed signal; and
the master control unit (19) is configured to control the fuel cell (11) to supply electrical energy to the motor, and control the super capacitor (12) and/or the power battery (13) to absorb surplus braking feedback energy, or control the fuel cell (11) to charge the super capacitor (12) and/or the power battery (13), if the signal received by the master control unit (19) from the vehicle controlling device is a brake signal or a deceleration signal.

2. The system according to claim 1, further comprising an auxiliary system,
wherein the auxiliary system is coupled to the fuel cell (11) and/or the power battery (13), so as to provide lighting for the tramcar and/or control temperature inside the tramcar.

3. The system according to claim 1, wherein the tramcar power system is disposed on top of the tramcar.

4. The system according to any one of claims 1-3, wherein the super capacitor (12) is coupled to a pantograph of the tramcar via the first bi-directional direct-current converter (15).

5. The system according to claim 4, wherein the master control unit (19) is configured to control the fuel cell (11) and/or the power battery (13) to supply electrical energy to the auxiliary system.

6. The system according to claim 5, wherein the configuration of master control unit (19) to control the super capacitor (12) to supply electrical energy to the motor of the tramcar comprises:
the master control unit (19) is configured to control the super capacitor (12) to discharge electrical energy, wherein the electrical energy is transferred to and converted by the first bi-directional direct-current converter (15), then transferred to and converted by the inverter (18), and then transferred to the motor of the tramcar.

7. The system according to claim 5, wherein the master control unit (19) is configured to control the fuel cell (11) and/or the power battery (13) to continue to supply electrical energy to the motor comprises:
the master control unit (19) is configured to control the fuel cell (11) to output electrical energy, wherein the electrical energy is transferred to and converted by the unidirectional direct-current converter (14), then transferred to and converted by the inverter (18), and then transferred to the motor of the tramcar;
and/or,
the master control unit (19) is configured to control the power battery (13) to output electrical energy, wherein the electrical energy is transferred to and converted by the second bi-directional direct-current converter (16), then transferred to and converted by the inverter (18), and then transferred to the motor of the tramcar.

## Patentansprüche

1. Straßenbahnwagen-Energiesystem, umfassend: eine Brennstoffzelle (11), einen Superkondensator (12), eine Energiebatterie (13), einen unidirektionalen Gleichstromwandler (14), einen ersten bidirektionalen Gleichstromwandler (15), einen zweiten bidirektionalen Gleichstromwandler (16), einen Gleichstrombus (17), einen Wechselrichter (18) und eine Hauptsteuereinheit (19),
wobei die Brennstoffzelle (11) mit dem unidirektionalen Gleichstromwandler (14) gekoppelt ist, der Superkondensator (12) mit dem ersten bidirektionalen Gleichstromwandler (15) gekoppelt ist, und die Energiebatterie (13) mit dem zweiten bidirektionalen Gleichstromwandler (16) gekoppelt ist;
der unidirektionale Gleichstromwandler (14), der erste bidirektionale Gleichstromwandler (15) und der zweite bidirektionale Gleichstromwandler (16) über den Gleichstrombus (17) mit dem Wechselrichter (18) gekoppelt sind;
der Wechselrichter (18) mit einem Motor eines Straßenbahnwagens gekoppelt ist;
die Brennstoffzelle (11), der Superkondensator (12), die Energiebatterie (13), der erste bidirektionale Gleichstromwandler (15), der zweite bidirektionale Gleichstromwandler (16) und der Wechselrichter (18) mit der Hauptsteuereinheit (19) gekoppelt sind;
die Hauptsteuereinheit (19) mit einer Straßenbahnwagen-Steuervorrichtung des Straßenbahnwagens gekoppelt ist;
wobei die Hauptsteuereinheit (19) zum Empfang eines von einer Fahrzeugsteuervorrichtung des Straßenbahnwagens gesendeten Signals konfiguriert ist;
die Hauptsteuereinheit (19) zur Steuerung des Superkondensators (12) konfiguriert ist, um dem Motor des Straßenbahnwagens elektrische Energie zuzuführen, wenn das von der Hauptsteuereinheit (19) aus der Fahrzeugsteuervorrichtung empfangene Signal ein Straßenbahnwagen-Startsignal oder ein Straßenbahnwagen-Beschleunigungssignal ist; die Hauptsteuereinheit (19) zur Steuerung der Brennstoffzelle (11) und/oder der Energiebatterie (13) konfiguriert ist, um den Motor weiterhin mit elektrischer Energie zu versorgen, oder um die Brennstoffzelle (11) und/oder die Energiebatterie (13) zu steuern, um den Motor mit elektrischer Energie zu versorgen, wenn der Straßenbahnwagen noch keine Zielgeschwindigkeit erreicht hat, während der Superkondensator (12) vollständig entladen worden ist;
und die Hauptsteuereinheit (19) zur Steuerung des Superkondensators (12) konfiguriert ist, um elektrische Energie zu liefern, die zum Aufbau der Ausgleichsleistung erforderlich ist, wenn der Straßenbahnwagen noch keine Zielgeschwindigkeit erreicht hat, während die von der Brennstoffzelle (11) und/oder der Energiebatterie (13) gelieferte Leistung nicht ausreicht;
die Hauptsteuereinheit (19) zur Steuerung der Brennstoffzelle (11) und/oder der Energiebatterie (13) konfiguriert ist, um weiterhin elektrische Energie an den Motor zu liefern, wenn das von der Hauptsteuereinheit (19) von der Fahrzeugsteuervorrichtung empfangene Signal ein Gleichlaufgeschwindigkeitssignal ist; und
die Hauptsteuereinheit (19) zur Steuerung der Brennstoffzelle (11) konfiguriert ist, um dem Motor elektrische Energie zu liefern, und um den Superkondensator (12) und/oder die Energiebatterie (13) zu steuern, um überschüssige Bremsrückkopplungsenergie zu absorbieren, oder um die Brennstoffzelle (11) zur Aufladung des Superkondensators (12) und/oder der Energiebatterie (13) zu steuern, wenn das Signal, das von der Hauptsteuereinheit (19) aus der Fahrzeugsteuervorrichtung empfangen wird, ein Bremssignal oder ein Entschleunigungssignal ist.

2. System nach Anspruch 1, ferner umfassend ein Hilfssystem,
wobei das Hilfssystem mit der Brennstoffzelle (11) und/oder der Energiebatterie (13) gekoppelt ist, um eine Beleuchtung für den Straßenbahnwagen bereitzustellen und/oder um die Temperatur im Inneren des Straßenbahnwagens zu steuern.

3. System nach Anspruch 1, wobei das Straßenbahnwagen-Energiesystem oben auf dem Straßenbahnwagen angeordnet ist.

4. System nach einem der Ansprüche 1-3, wobei der Superkondensator (12) über den ersten bidirektionalen Gleichstromwandler (15) an einen Stromabnehmer des Straßenbahnwagens gekoppelt ist.

5. System nach Anspruch 4, wobei die Hauptsteuereinheit (19) zur Steuerung der Brennstoffzelle (11) und/oder der Energiebatterie (13) konfiguriert ist, um elektrische Energie an das Hilfssystem zu liefern.

6. System nach Anspruch 5, wobei die Konfiguration der Hauptsteuereinheit (19) zur Steuerung des Superkondensators (12), um elektrische Energie an den Motor des Straßenbahnwagens zu liefern, Folgendes umfasst:
die Hauptsteuereinheit (19) ist zur Steuerung des Superkondensators (12) konfiguriert, um elektrische Energie abzugeben, wobei die elektrische Energie an den ersten bidirektionalen Gleichstromwandler (15) übertragen und von diesem umgewandelt wird, dann an den Wechselrichter (18) übertragen und von diesem umgewandelt wird, und dann an den Motor des Straßenbahnwagens übertragen wird.

7. System nach Anspruch 5, wobei die Hauptsteuereinheit (19) zur Steuerung der Brennstoffzelle (11) und/oder der Energiebatterie (13) konfiguriert ist, um weiterhin elektrische Energie an den Motor zu liefern, umfassend:
die Hauptsteuereinheit (19) ist zur Steuerung der Brennstoffzelle (11) konfiguriert, um elektrische Energie auszugeben, wobei die elektrische Energie an den unidirektionalen Gleichstromwandler (14) übertragen und von diesem umgewandelt, dann an den Wechselrichter (18) übertragen und von diesem umgewandelt und dann an den Motor des Straßenbahnwagens übertragen wird;
und/oder,
die Hauptsteuereinheit (19) zur Steuerung der Energiebatterie (13) konfiguriert ist, um elektrische Energie auszugeben, wobei die elektrische Energie an den zweiten bidirektionalen Gleichstromwandler (16) übertragen und von diesem umgewandelt wird, dann an den Wechselrichter (18) übertragen und von diesem umgewandelt wird und dann an den Motor des Straßenbahnwagens übertragen wird.

## Revendications

1. Système d'énergie de tramway comprenant une pile à combustible (11), un supercondensateur (12), une batterie d'alimentation (13), un convertisseur de courant continu unidirectionnel (14), un premier convertisseur de courant continu bidirectionnel (15), un second convertisseur de courant continu bidirectionnel (16), un bus en courant continu (17), un onduleur (18) et une unité de commande principale (19),
en ce que la pile à combustible (11) est couplée au convertisseur de courant continu unidirectionnel (14), le supercondensateur (12) est couplé au premier convertisseur de courant continu bidirectionnel (15) et la batterie d'alimentation (13) est couplée au second convertisseur de courant continu bidirectionnel (16) ;
le convertisseur de courant continu unidirectionnel (14), le premier convertisseur de courant continu bidirectionnel (15) et le second convertisseur de courant bidirectionnel (16) sont couplés à l'onduleur (18) par l'intermédiaire du bus en courant continu (17) ;
l'onduleur (18) est couplé à un moteur d'un tramway ;
la pile à combustible (11), le supercondensateur (12), la batterie d'alimentation (13), le premier convertisseur de courant continu bidirectionnel (15), le second convertisseur de courant continu bidirectionnel (16) et l'onduleur (18) sont couplés à l'unité de commande principale (19) ;
l'unité de commande principale (19) est couplée à un dispositif de commande de tramway du véhicule tramway ;
en ce que l'unité de commande principale (19) est conçue pour recevoir un signal envoyé du dispositif de commande de véhicule du tramway ;
l'unité de commande principale (19) est conçue pour commander le supercondensateur (12) afin de fournir de l'énergie électrique au moteur du tramway, si le signal reçu par l'unité de commande principale (19) du dispositif de commande de véhicule est un signal de démarrage de tramway ou un signal d'accélération de tramway ; l'unité de commande principale (19) est conçue pour commander la pile à combustible (11) et/ou la batterie d'alimentation (13) de continuer à fournir de l'énergie électrique au moteur, ou de commander la pile à combustible (11) et/ou la batterie d'alimentation (13) afin de fournir de l'énergie électrique au moteur lorsque le tramway n'a pas encore atteint une vitesse cible tandis que le supercondensateur (12) a été complètement déchargé ; et l'unité de commande principale (19) est conçue pour commander le supercondensateur (12) afin de fournir l'énergie électrique requise à la constitution de la puissance d'équilibre lorsque le tramway n'a pas encore atteint une vitesse cible tandis que la puissance fournie par la pile à combustible (11) et/ou la batterie d'alimentation (13) est insuffisante ;
l'unité de commande principale (19) est conçue pour commander la pile à combustible (11) et/ou la batterie d'alimentation (13) afin de continuer à fournir de l'énergie électrique au moteur si le signal reçu par l'unité de commande principale (19) du dispositif de commande de véhicule est un signal de vitesse d'équilibre ; et
l'unité de commande principale (19) est conçue pour commander la pile à combustible (11) afin de fournir de l'énergie électrique au moteur, et commander le supercondensateur (12) et/ou la batterie d'alimentation (13) afin d'absorber le surplus d'énergie de rétroaction de freinage, ou commander la pile à combustible (11) afin de charger le supercondensateur (12) et/ou la batterie d'alimentation (13) si le signal reçu par l'unité de commande principale (19) du dispositif de commande de véhicule est un signal de freinage ou un signal de décélération.

2. Système selon la revendication 1, comprenant en outre un système auxiliaire, en ce que le système auxiliaire est couplé à la pile à combustible (11) et/ou à la batterie d'alimentation (13) afin d'assurer l'éclairage du tramway et/ou de contrôler la température à l'intérieur du tramway.

3. Système selon la revendication 1, en ce que le système d'énergie de tramway est disposé sur la partie supérieure du tramway.

4. Système selon l'une des revendications 1 à 3, en ce que le supercondensateur (12) est couplé à un pantographe du tramway par l'intermédiaire du premier convertisseur de courant continu bidirectionnel (15).

5. Système selon la revendication 4, en ce que l'unité de commande principale (19) est conçue pour commander la pile à combustible (11) et/ou la batterie d'alimentation (13) afin de fournir de l'énergie électrique au système auxiliaire.

6. Système selon la revendication 5, en ce que la configuration de l'unité de commande principale (19) pour commander le supercondensateur (12) afin de fournir de l'énergie électrique au moteur du tramway comprend :
l'unité de commande principale (19) qui est conçue pour commander le supercondensateur (12) afin de décharger de l'énergie électrique, en ce que l'énergie électrique est transférée au et convertie par le premier convertisseur de courant continu bidirectionnel (15), puis transférée au et convertie par l'onduleur (18), et ensuite transférée au moteur du tramway.

7. Système selon la revendication 5, en ce que l'unité de commande principale (19) est conçue pour commander la pile à combustible (11) et/ou la batterie d'alimentation (13) afin de continuer à fournir de l'énergie électrique au moteur comprend :
l'unité de commande principale (19) qui est conçue pour commander la pile à combustible (11) afin de sortir de l'énergie électrique, en ce que l'énergie électrique est transférée au et convertie par le convertisseur de courant continu unidirectionnel (14), puis transférée au et convertie par l'onduleur (18), et ensuite transférée au moteur du tramway ;
et/ou
l'unité de commande principale (19) qui est conçue pour commander la batterie d'alimentation (13) pour sortir de l'énergie électrique, en ce que l'énergie électrique est transférée au et convertie par le second convertisseur de courant continu bidirectionnel (16), puis transférée au et convertie par l'onduleur (18), et ensuite transférée au moteur du tramway.
